# EUROPEAN PATENT APPLICATION

(11) **EP 0 884 477 A2**
(43) Date of publication of application: **16.12.1998**
(21) Application number: 98201789.9
(22) Date of filing: 29.05.1998
(51) Int. Cl.: F04B 49/06

(54) **Loading ramp**

(30) Priority: 30.05.1997 IT MI970389 U
(71) Applicant: Campisa S.r.l., 20030 Palazzolo Milanese (Milano) (IT)
(72) Inventor: Nelzi, Giampaolo, 22070 Appiano Gentile (Como) (IT)
(74) Representative: De Gregori, Antonella

(57) **Abstract**

The improvement consists in providing the drive means (2,2A) of the loading ramp (1) with a DC electric motor (28) at a very low voltage, said motor is powered by an accumulator battery (24) associated to a battery charger (23) which can be connected to the 220 V power grid. In this way the loading ramp (1) can be driven independently of the presence of the power grid voltage and the electric system (9, 9A) is more economical since it does not require the expensive protective means needed for the corresponding electric systems which work with 380 V current.

## Description

The present invention refers to an improved loading ramp.

The above mentioned loading ramps are known, for instance, from EP-A-459 002 or from EP-A-369 106. Said loading ramps are usually provided with drive means which move the ramp from a rest position to a working position.

A loading ramp substantially comprises: a platform which has a first edge which can be hinged to the ground close to the threshold of a freight loading opening and a second edge which is hinged to a folding plate suitable to lean on the loading floor of a vehicle.

The drive means comprise a hydraulic system and an electric system. The hydraulic system comprises at least a hydraulic pump which drives at least a couple of hydraulic cylinders which are the actuators of the platform and of the folding plate respectively. The electric system comprises a feeding electric circuit and a control electric circuit, said circuits drive at least a 380 V three-phase electric motor which drives the hydraulic pump. The hydraulic system comprises a hydraulic pump which drives at least a couple of hydraulic cylinders which are the actuators of the platform and of the folding plate respectively.

These types of loading ramps are not sufficiently reliable and are not safe since, in case the power supply stops, said loading ramps can not be driven or they can only be driven manually, with all the associated inconveniences. In particular, in the case the electric power is stopped because of a fire, the locked ramps could become an obstacle to evacuate the premises through the openings provided therein. Further, the electric system needed for the proper operation of said loading ramps affects significantly the manufacturing, installation and maintenance costs since said electric system has to be realised, installed, assembled and managed so as to reduce to the minimum level the danger of electric shocks for the installers, the operators and for the maintenance people.

The purpose of the present invention is to provide a loading ramp which overcomes simultaneously the above disadvantages, and to provide a loading ramp which can work independently of the presence of the power grid voltage and which is, further, more economical than the traditional loading ramps of the same type.

Said purposes are achieved by a loading ramp according to claim 1, which is taken as reference.

By powering the electric motor through an accumulator battery rechargeable by means of a battery charger, the loading ramp can be driven even in case of power grid failures. The loading ramp according to the invention is therefore much more reliable than the corresponding loading ramps. Further, the use of very low voltages reduces significantly the manufacturing, assembly and maintenance costs of the electric system since the electric system is much simpler as it is no longer necessary to provide it with specific means and/or features to protect the user of the loading ramp from electric shocks, while said means and/or features are requested in the case of higher working voltages. The cost reduction is such that it largely compensates the need to integrate the accumulator battery and the battery charger in the electric system.

Said features shall be more evident from the description relative to two preferred embodiments of the invention; it is understood that said embodiments are just non limiting examples of the invention.

Figure 1 shows schematically a loading ramp according to the invention.

Figure 2 shows schematically the drive means of an improved loading ramp, according to the invention, in a first embodiment.

Figure 3 shows schematically and partially the drive means of an improved loading ramp, according to the invention, in a second embodiment.

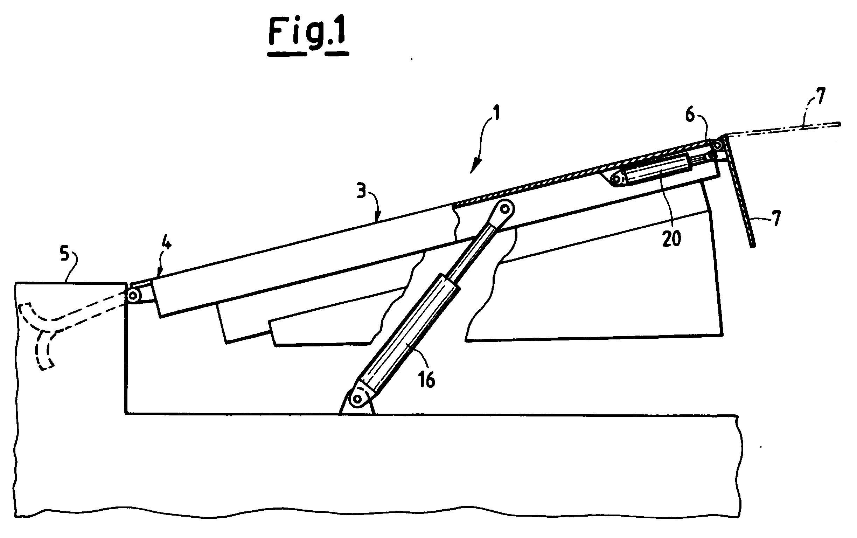

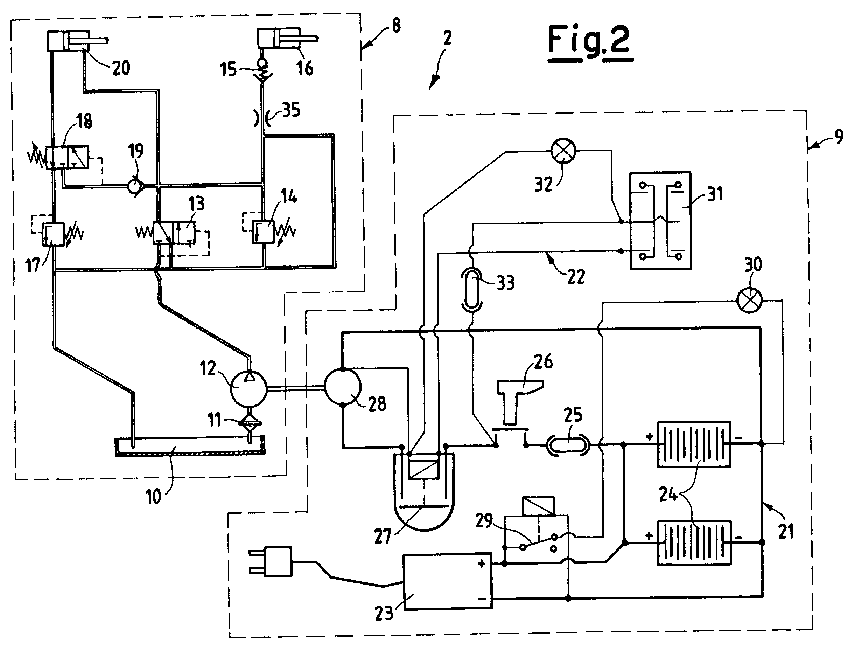

With reference to the above figures and in particular to Figures 1 and 2, the loading ramp, improved according to the invention, comprises, besides the loading ramp generally indicated by numeral 1, drive means, generally indicated by numeral 2.

The loading ramp 1 comprises a platform 3 which has a first edge 4 which can be hinged to the ground close to the threshold 5 of a freight loading opening and a second edge 6 which is hinged to a folding plate 7 suitable to lean on the loading floor of a vehicle (not shown). The drive means 2 comprise a hydraulic system 8 and an electric system 9.

The hydraulic system 8 substantially comprises a liquid (oil) storage tank 10, a filter 11, at least a hydraulic pump 12, a switch valve 13 set, in this example, at 5 bar, a maximum pressure valve 14 set, in this example, at 120 bar, a first nonreturn valve 15 to block the cylinder in case that the vehicle moves away during the loading operations, at least a first cylinder 16 to lift the platform 3, a maximum pressure valve 17 set, in this example, at 15 bar, a switch valve 18 set, in this case, at 90 bar, a second nonreturn valve 19, at least a second cylinder 20 to drive the folding plate 7 and a throttle valve 35. The components of the hydraulic system 8 are hydraulically connected and positioned in such a way that the pump 12 drives the cylinders 16 and 20. The electric system 9 comprises an electric circuit to power the motor generally indicated by numeral 21, and an electric control system generally indicated by numeral 22.

The electric circuit 21, which powers the motor, substantially comprises: a battery charger 23, at least one accumulator battery 24, a first fuse 25, a battery switch 26, a first relay 27 and a motor 28 which drives the hydraulic pump 12 which is mechanically connected to said motor. As shown in Figure 2, the electric connections among the components of the electric circuit 21, which powers the motor, are realised to guarantee the power supply and therefore the operation of the motor 28.

In the example, two accumulator batteries 24 are provided in order to increase the reliability, said batteries are connected in parallel so as to avoid the risk that one of the batteries is short circuited; the reliability is increased by increasing the number of batteries and by placing said batteries in different places. The electric motor 28 and the accumulator batteries 24 are of the very low voltage type (preferably 12 V direct current), the battery charger 23 can be preferably connected to the alternate current power grid, preferably 220 V monophase current.

The battery charger 23 is of the stabilised type, again in order to increase the reliability. Further, in the shown example, the electric circuit 21, which powers the motor, is connected to a second relay 29 and at least to an emergency light 30, said relay and said light are activated by power grid failures. The electric control circuit 22 substantially comprises a push-button 31, a pilot light 32, a second fuse 33 and the already mentioned first motor relay 27 which is the connection element between the power feeding electric circuit 21 and the electric control circuit 22.

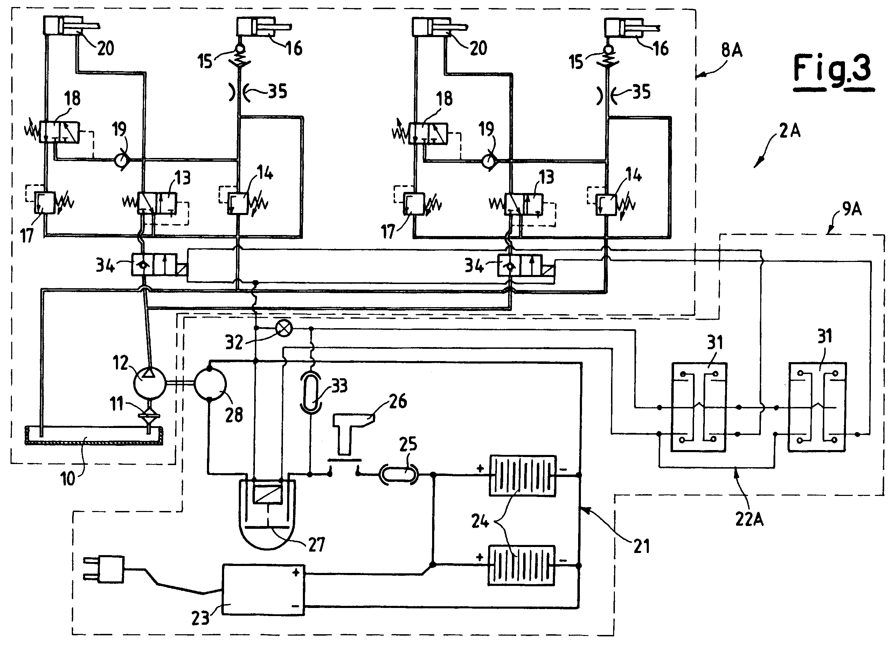

The drive means 2A shown in Figure 3 are different from the ones shown in Figure 2 since they are structured so as to drive a plurality of loading ramps 1, which can then be controlled by a single hydraulic system 8A and by a single electric system 9A. In Figure 3 the elements corresponding to the elements of Figure 2 are indicated with the same numerals. In summary: the hydraulic system 8A is different from the system 8 since it comprises a plurality of first 16 and second 20 hydraulic cylinders and, additionally, as many stop solenoid valves 34 as the couples of first 16 and second 20 hydraulic cylinders (two in this example). The electric system 9A is different from the electric system 9 since, substantially, the motor electric control circuit 22A comprises a number of push-buttons 31 equal to the number of couples of cylinders 16 and 20 (two in this example).

The lifting of each loading ramp 1 and the unfolding of the folding plate 7 is realised by starting up the motor 28 and therefore by putting the hydraulic system 8 or 8A under pressure (Figures 2 and 3 show how the hydraulic systems work). The lowering of the loading ramp 1 is instead realised by exploiting the force of gravity and by adjusting the oil flow in the hydraulic system 8 and/or 8A by means of the valve 35. As shown in the scheme of Figure 3, the electric system 9A allows the single or simultaneous operation of all the loading ramps 1.

During normal operations, the use of the loading ramp is generally sporadic, thus the hydraulic force is used only to connect the loading ramp to the vehicle flatbed.

Therefore, during the entire loading/unloading operation of the vehicle, the loading ramp is just a still bridge positioned on the vehicle flatbed, and said ramp follows the movement of the vehicle suspensions. At the end of the loading and unloading operations the ramp is moved back to its rest position. The average use of the loading ramp is of about one and a half minute for each loading-unloading operation, therefore an average of one and a half minute of working time every three quarters of an hour. Such a long interval allows the use of low capacity buffer accumulator batteries, wherein said batteries can be recharged by a low consumption battery charger, which can work with simple monophase current. Just as an example, a loading ramp, with a carrying capacity of 10 tons, can be driven by an electrohydraulic motor of just 500 Watt, which can be powered by a small 45 AH accumulator battery and which guarantees at least 20 folding and unfolding cycles, without having to recharge the battery. Always as an example, the transformer of the battery charger, associated to the recharge system of said battery, can just be a 30 VA transformer, with a current consumption of very few Watt. In order to avoid the risk of having a short circuited battery, at least two batteries 24, connected in parallel, are provided in this example. Should one battery fail, the other will work. The use of the drive means, in the case of the loading ramps, is usually so sporadic that said drive means 2 can be used for more than one loading ramp, as shown for instance in Figure 3, wherein the drive means 2A drive at least two loading ramps 1. The drive means 2A can be used also for other hydraulic devices which may be relatively close to the loading ramps 1, as for instance rolling gates. A suitable rolling gate could be for instance the one described by Italian patent no. 1 246 178.

In case that the drive means 2 drive several hydraulic equipment, the chosen device is driven by sending the hydraulic force flow only towards said device, by opening, for instance, a flow check solenoid valve 34.

In the case that the motor 28 and the pump 12 are devoted to just one ramp 1 (Figure 2), the hydraulic pressure, during the ramp operation, lifts the ramp 1 up to the stroke end of the lifting cylinder 16 thus actuating, by overpressure, the switch valve 18 which deviates the hydraulic flow towards the bottom of the cylinder 20 which extends and causes the opening of the folding plate 7 of the loading ramp 1. By releasing the control push-button 31, the ramp 1 descends smoothly since it is slowed down by the throttle valve 35 and the extended folding plate 7 of the ramp 1 leans on the vehicle flatbed as a still bridge, which does not use any additional hydraulic force in order to keep its position even when said plate supports the passage of the loading freight. Once the loading-unloading operations are finished, by pushing said push-button 31, the hydraulic pressure lifts the ramp 1 and simultaneously withdraws the folding plate 7 since the flow is also in communication with the second element of the cylinder 20 of the folding plate 7 which withdraws while being slowed down by the maximum pressure valve 17 thus causing the plate 7 to recede. The plate 7 recedes before the stroke end of the lifting cylinder 16 and, by releasing the control push-button, the ramp 1 descends and the plate 7 returns to its rest position.

In the other example of Figure 3, the motor 28 and the hydraulic pump 12 drive two ramps 1 which can be selected by opening the corresponding stop solenoid valve 34. The descent can be automatic, when the control push button is released, or said descent can be controlled by opening a corresponding valve.

In summary, the invention has the following advantages:
- a significant saving if compared to the systems with electrohydraulic motors which are powered by power grid current, since said systems use much more expensive components and need expensive certifications as well as equally expensive safety devices against the accidents caused by the use of low voltage current, generally 220/380 V three-phase current.
- A significant saving on the electric power costs if compared with the electric power supplying company, since, for instance, a 1 KW motor is associated to each ramp and the minimum current requirement is equal to the sum of all the power values of the installed motors independently of the fact that said motors are used sporadically. The embodiment according to the invention reduces the power consumption to few Watts with a 220 V monophase current.
- A significant saving in the construction of the inner power grid, since the recharge system of the accumulators can be connected to any 220 V electric outlet, while the traditional systems require a shunt line and a 380 V three-phase electric board for every ramp and for every rolling gate, provided with electric lines with adequate sections, and all of said lines have to be protected, according to the law, through the use of differential switches.
- Compliance with the fire prevention requirements, since the system of the invention is driven by an independent and autonomous control device which can work even in case of fire since it is not dependent from the power grid electric supply.

## Claims

1. Improved loading ramp which comprises a loading ramp (1) and drive means (2, 2A) of said ramp, wherein said loading ramp (1) comprises a platform (3) which has a first edge (4) which can be hinged to the ground (5) close to the threshold of a freight loading opening and a second edge (6) which is hinged to a folding plate (7) suitable to lean on the loading floor of a vehicle, wherein the drive means (2, 2A) comprise a hydraulic system (8, 8A) and an electric system (9, 9A), wherein:
- said hydraulic system (8, 8A) comprises at least a hydraulic pump (12) which drives at least one hydraulic cylinder (16) which drives the platform (3);
- said electric system (9, 9A) comprises an electric circuit (21) which powers the motor and a control electric circuit (22, 22A), said circuits drive at least an electric motor (28) which drives the hydraulic pump (12),
characterised in that the electric motor (28) is of the very low voltage type and is powered by at least one accumulator battery (24) connected to a battery charger (23) which can be connected to the power grid.

2. Improved loading ramp as claimed in claim 1, characterised in that the electric motor (28) is a DC motor and in that the battery charger (23) can be connected to a low voltage power grid.

3. Improved loading ramp as claimed in claim 2, characterised in that the electric motor (28), the accumulator battery (24) are of the very low voltage type and in that the battery charger (23) is of the type which can be connected to a power grid.

4. Improved loading ramp as claimed in claim 1, characterised in that the battery charger (23) is of the stabilised type.

5. Improved loading ramp as claimed in claim 1, characterised by comprising two accumulator batteries (24) in a parallel arrangement.

6. Improved loading ramp as claimed in claim 1, characterised in that the electric circuit (21) which powers the motor is associated to a relay (27) and to at least one emergency light (30), said relay and said light are activated in case of a power grid failure.

7. Improved loading ramp as claimed in claim 1, characterised in that the drive means (2, 2A), the electric system (9, 9A) and the hydraulic system (8, 8A) of a loading ramp (1) drive a plurality of loading ramps (1) and/or rolling gates and/or other devices.
